# DEMANDE DE BREVET EUROPEEN

(11) **EP 4 040 385 A1**
(43) Date de publication de la demande: **10.08.2022**
(21) Numéro de dépôt: 21305155.0
(22) Date de dépôt: 05.02.2021
(51) Int. Cl.: G06T 7/00

(54) **PROCÉDÉ DE DÉTECTION AUTOMATIQUE DE DOMMAGES SUR UN VÉHICULE AUTOMOBILE**

(71) Demandeur: Proov Group, 92200 Neuilly-sur-Seine (FR)
(72) Inventeur: PERRET-MEYER, Alexandre, 92200 Neuilly-sur-Seine (FR); TISSANDIER, Gabriel, Pierre, Maxime, 92200 Neuilly-sur-Seine (FR); MANCERON, Jean-Luc Cédric, 92200 Neuilly-sur-Seine (FR)
(74) Mandataire: Fédit-Loriot

(57) **Abrégé**

Procédé (1) mis en œuvre par ordinateur de détection de dommages sur un véhicule automobile
Caractérisé en ce qu'il comprend :
- Un sous-procédé de détection (12) des parties externes du véhicule automobile (100) sur ladite au moins une image de référence ;
- Un sous-procédé de détection (13) de dommages comprenant, pour chaque image acquise à l'étape d'acquisition (10) :
o Une étape d'association (132) au cours de laquelle on détermine une fonction de transformation de plan entre ladite image et ladite au moins une image de référence ;
o Une étape de transposition (133) des dommages détectés dans ladite image sur ladite au moins une image de référence par ladite fonction de transformation de plan déterminée.

## Description

L'invention concerne un procédé de détection automatique de dommages sur un véhicule automobile.

Dans le domaine de l'automobile, il existe de nombreux cas de transfert de responsabilité du véhicule ou d'expertise du véhicule au cours desquels on établit un rapport d'état du véhicule, et en particulier un rapport de l'état extérieur du véhicule automobile.

Cependant, un tel rapport est relativement long à réaliser, et il est parfois difficile de remarquer à l'œil tous les dommages présents sur toutes les parties externes du véhicule automobile.

Afin d'automatiser une telle procédure d'établissement d'un rapport de l'état extérieur d'un véhicule automobile, on connaît des techniques dans l'art antérieur, telle que celle décrite dans le document EP3736758A1. Toutefois, le procédé décrit est relativement difficile à mettre en œuvre dans des conditions d'utilisation courantes, car il suppose la fourniture d'un fichier d'image complet du véhicule. Or, un tel fichier d'image tel qu'il est décrit n'est généralement pas disponible lorsque, par exemple, un état des lieux est réalisé devant un véhicule automobile avec un appareil mobile tel qu'un téléphone portable.

Par conséquent, il existe le besoin d'une solution améliorée de détection de dommage sur un véhicule automobile pouvant être mis en œuvre dans des conditions de prise de vues courantes, par exemple avec un appareil mobile.

À cet effet, on propose un procédé mis en œuvre par ordinateur de détection de dommages sur un véhicule automobile présentant une pluralité de parties externes, telles que des parties de carrosseries ou des équipements extérieurs tels que des phares, rétroviseurs, poignées, ledit procédé comprenant une étape d'acquisition d'une pluralité d'images du véhicule automobile.

Le procédé comprenant en outre :
- Une étape de sélection d'au moins une image de référence parmi ladite pluralité d'images ;
- Un sous-procédé de détection des parties externes du véhicule automobile sur ladite au moins une image de référence comprenant ; et
- Un sous-procédé de détection de dommages comprenant, pour chaque image acquise à l'étape d'acquisition :
   -- Une étape d'analyse au cours de laquelle on détecte dans ladite image des dommages,
   -- Une étape d'association au cours de laquelle on détermine une fonction de transformation de plan entre ladite image et ladite au moins une image de référence ;
   -- Une étape de transposition des dommages détectés dans ladite image sur ladite au moins une image de référence par ladite fonction de transformation de plan déterminée ; et
   -- Une étape de calcul de la dimension de chaque dommage transposé sur ladite image de référence ;
Le procédé comprenant en outre une étape de croisement des éléments externes détectés sur ladite au moins une image de référence avec les dommages transposés sur ladite image de référence de sorte à déterminer pour chaque partie externe du véhicule les dommages associés.

Ainsi on peut obtenir un procédé relativement performant et robuste pour détecter précisément les dommages présents sur les parties externes d'un véhicule en estimant leur taille et la ou les parties du véhicule sur lesquelles ils sont présents, et ce à partir de tous types d'images prises par un utilisateur.

En particulier, ladite fonction de transformation de plan comprend une fonction homographique. Une telle fonction étant particulièrement robuste pour assurer l'association entre deux parties d'images.

Avantageusement, à ladite étape de sélection on sélectionne une pluralité d'images de référence, et en ce qu'à l'étape d'association on détermine pour chaque image au moins une image de référence autorisant le calcul d'une fonction de transformation de plan.

Ainsi, on calcule une pluralité d'images de référence de sorte à obtenir par ce procédé une détection des dommages sur l'ensemble du véhicule automobile.

Avantageusement, pour chaque image de la sélection d'images, ledit calcul de transformation de plan des dommages détectés de ladite image vers ladite image de référence est calculé en fonction d'une transformation bijective entre un ensemble de points caractéristiques sur ladite image et ce même ensemble de points caractéristiques sur ladite image de référence. Ceci permet d'obtenir une transformation relativement efficace par détection de points caractéristiques, qui peuvent être notamment un logo, une plaque d'immatriculation ou un signe distinctif sur l'image analysée que l'on retrouverait sur une image de référence.

Avantageusement, ladite étape de calcul de la dimension de chaque dommage comprend la définition d'un élément visuel de référence sur ladite image de référence, tel qu'une jante de roue, un logo de véhicule automobile, un phare ou une plaque d'immatriculation, ladite dimension de chaque dommage étant calculée en fonction de la dimension dudit élément extérieur de référence. Ainsi on peut obtenir un calcul relativement précis des dommages sur le véhicule par comparaison avec des éléments du véhicule automobile dont les dimensions sont connues par ailleurs du procédé.

Avantageusement, on définit au moins quatre images de référence, par exemple une prise de vue arrière-droite, une prise de vue arrière-gauche, une prise de vue avant-droite et une prise de vue avant-gauche, ou alternativement une prise de vue frontale, une prise de vue arrière, et deux prises de vues latérales opposées. Ceci permet ainsi d'avoir un nombre relativement faible d'images de référence, mais permettant l'obtention d'un résultat relativement exhaustif des dommages sur le véhicule.

On peut par ailleurs prévoir une cinquième prise de vue du toit du véhicule, et/ou une vue du soubassement du véhicule automobile.

Avantageusement, le sous-procédé de détection de dommages comprend la mise en œuvre d'un module de réseau de neurones convolutifs. Ceci permet d'obtenir un résultat de détection de dommages performant et robuste.

Avantageusement, le sous-procédé de détection des parties externes du véhicule automobile comprend la mise en œuvre d'un module de segmentation sémantique de l'image. Ceci permet d'obtenir une subdivision de véhicule en partie externe fiable et robuste.

Avantageusement, le sous-procédé de détection des parties externes du véhicule automobile comprend une sous-étape de reconnaissance d'une plaque d'immatriculation, et d'une sous-étape de détection automatique des caractères de ladite plaque d'immatriculation. Ainsi, on peut associer la détection des dommages à un identifiant du véhicule automobile.

Avantageusement, l'étape d'acquisition d'une pluralité d'images du véhicule automobile est suivie d'une étape de prétraitement au cours de laquelle les images sont uniformisées et au cours de laquelle on procède au retrait des images acquises non exploitables. Ainsi, on peut améliorer la détection de dommages et accélérer la mise en œuvre globale du procédé en retirant les images non exploitables.

Avantageusement, l'étape de prétraitement comprend en outre une étape d'isolation du véhicule automobile et/ou de retrait des véhicules tiers sur ladite image. Ainsi, on peut encore améliorer la robustesse du procédé en détectant le véhicule automobile dans les images en amont des sous-procédés de détection des parties et des dommages, et en retirant les véhicules tiers qui peuvent être source de confusion et d'erreur pour les sous-procédés.

L'invention concerne aussi un dispositif de détection de dommages sur un véhicule automobile présentant une pluralité de parties externes, tel que des parties de carrosseries ou des équipements extérieurs tels que des phares, rétroviseurs, poignées, ledit dispositif comprenant :

Des moyens d'acquisition d'une pluralité d'images du véhicule automobile ;
et des moyens de calcul aptes à mettre en œuvre :
- Une étape de sélection d'au moins une image de référence parmi ladite pluralité d'images ;
- Un sous-procédé de détection des parties externes du véhicule automobile sur ladite au moins une image de référence comprenant ; et
- Un sous-procédé de détection de dommages comprenant, pour chaque image acquise à l'étape d'acquisition :
   -- Une étape d'analyse au cours de laquelle on détecte dans ladite image des dommages,
   -- Une étape d'association au cours de laquelle on détermine une fonction de transformation de plan entre ladite image et ladite au moins une image de référence ;
   -- Une étape de transposition des dommages détectés dans ladite image sur ladite au moins une image de référence par ladite fonction de transformation de plan déterminée ; et
   -- Une étape de calcul de la dimension de chaque dommage transposé sur ladite image de référence ; et
- Une étape de croisement des éléments externes détectés sur ladite au moins une image de référence avec les dommages transposés sur ladite image de référence de sorte à déterminer pour chaque partie externe du véhicule les dommages associés.

D'autres particularités et avantages de l'invention ressortiront à la lecture de la description faite ci-après d'un mode de réalisation particulier de l'invention, donné à titre indicatif, mais non limitatif, en référence aux dessins annexés sur lesquels :
[Fig. 1a] [Fig. 1b] [Fig. 1c] [Fig. 1d] sont des images de références sur lesquelles apparaissent la segmentation sémantique opérée par le procédé selon un premier mode de réalisation de l'invention ;
[Fig. 2a] et [Fig. 2b] représentent une image de référence sur laquelle est mise en œuvre le sous-procédé de détection de dommages selon le mode de réalisation de la figure 1 ;
[Fig. 3] est une vue d'une projection de plan entre une traitée image a) et une image de référence b) selon le mode de réalisation de la figure 1 ;
[Fig. 4] est une première variante de mise en œuvre du procédé selon le mode de réalisation de la figure 1 ; et
[Fig. 5] est une seconde variante de mise en œuvre du procédé selon le mode de réalisation de la figure 1.

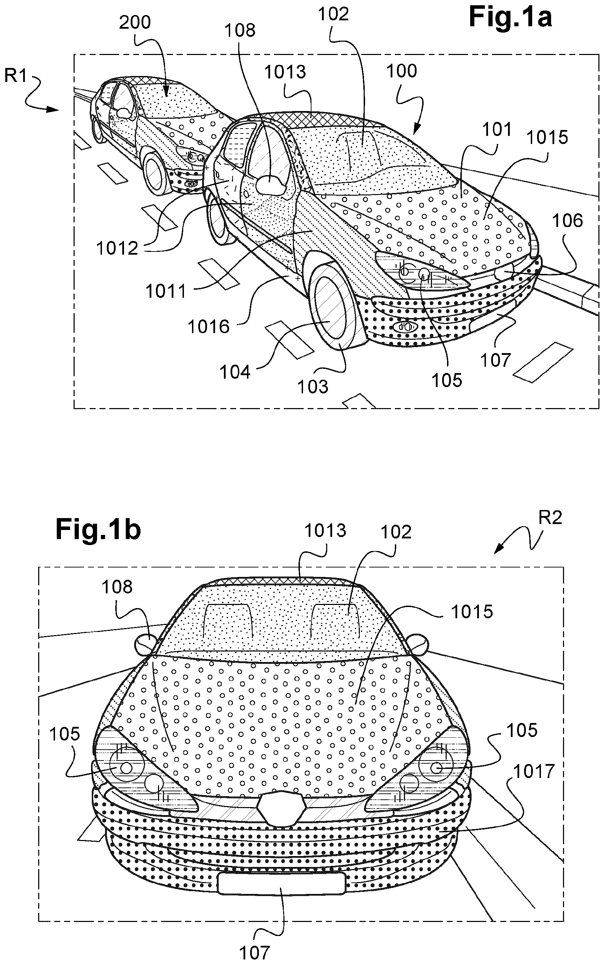

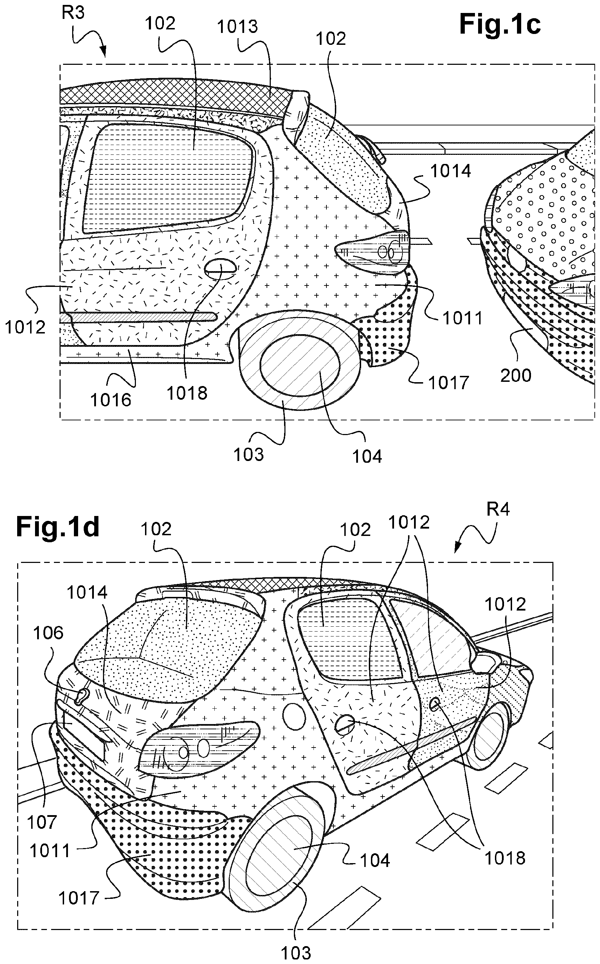

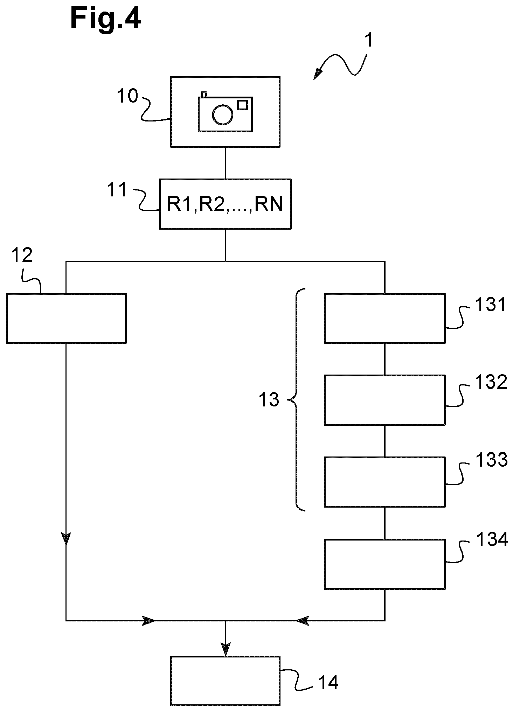

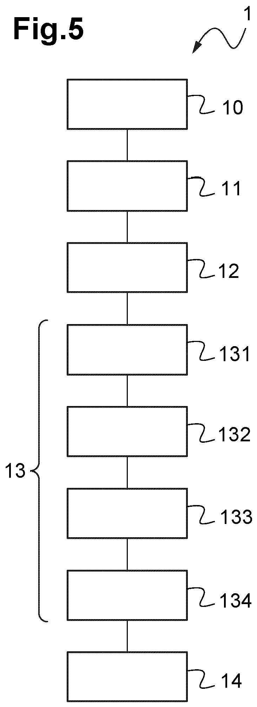

Les figures 1 à 5 se rapportant à un même mode de réalisation de l'invention elles seront commentées simultanément. Les figures 4 et 5 ne différant que par la mise en œuvre respectivement en parallèle, figure 4, ou en séquentiel, figure 5, des sous-procédés 12 et 13 selon l'invention.

Un procédé 1 de détection de dommages sur un véhicule automobile 100 est mis en œuvre par un ordinateur.

Au sens de l'invention, un ordinateur peut être un ordinateur personnel, un serveur, un appareil de télécommunication mobile, une tablette, un appareil photo équipé d'un processeur, ou tout autre dispositif adapté.

Ce procédé 1 permet de détecter les dommages éventuellement présents sur les parties externes d'un véhicule automobile 100.

Un véhicule automobile 100 comprend des éléments techniques et structurels masqués de l'extérieur dans des conditions d'utilisation normales, hors maintenance par exemple, on peut citer à titre d'exemple le moteur, les suspensions, le châssis, la colonne de direction, les calculateurs embarqués etc.

On connaît aussi des éléments internes visibles tels que les éléments de l'habitacle, par exemple le tableau de bord, les sièges, etc.

On connaît enfin les parties externes 101-108 que sont notamment la carrosserie 101, elle-même composée de plusieurs sous-parties distinctes, les vitres 102, les roues 103, les jantes 104 ou enjoliveurs, les phares 105, les logos 106, plaques d'immatriculation 107 et rétroviseurs 108. Le procédé vise à détecter automatiquement les dommages présents sur cette catégorie d'éléments externes.

Comme indiqué précédemment, la carrosserie 101 est subdivisible en différentes sous-parties telles que les ailes 1011, les portières 1012, le toit 1013, le hayon 1014, le capot 1015, les bas de caisse 1016, les pare-chocs 1017 avant et arrière, les poignées 1018.

Afin de détecter les dommages sur ces parties externes, le procédé 1 comprend dans une première étape l'acquisition 10 d'une pluralité d'images du véhicule automobile.

On acquiert ici les images par leur extraction d'un flux vidéo. Ce flux vidéo étant produit par une caméra filmant le véhicule automobile.

Toutefois, l'invention n'est pas limitée à ce seul mode d'acquisition d'image. On peut notamment acquérir les images par un appareil photographique, ou tout dispositif d'acquisition d'images photographiques tel que des appareils téléphoniques mobiles, dit smartphones, des tablettes, ou tout autre dispositif d'acquisition, notamment des dispositifs comprenant un capteur optique numérique tel qu'un capteur CCD.

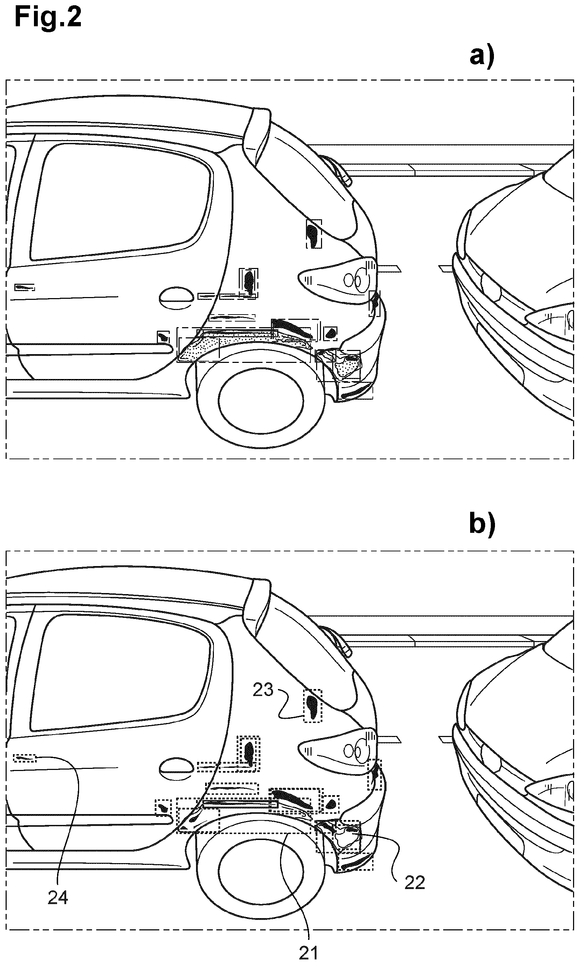

Les photos acquises sont généralement des prises de vues du véhicule garé, telles que celles représentées en figures 1a-1d et 2.

Ainsi l'étape d'acquisition 10 est dans ce mode de réalisation, la simple acquisition d'images acquises librement par l'utilisateur.

Dans un deuxième exemple de mise en œuvre de l'invention, l'étape d'acquisition 10 est intégrée à un applicatif du type interface homme-machine, guidant l'utilisateur dans la prise d'images, par exemple par des indications visuelles, textuelles ou sonores, ou un procédé de réalité augmentée ou de superposition d'un modèle schématique de prise de vue sur l'image captée par l'appareil de prise de vue de l'utilisateur afin d'inciter l'utilisateur à acquérir certaines prises de vues selon des angles prédéterminés du véhicule. Autrement dit, il s'agit d'une étape d'acquisition assistée, au cours de laquelle le procédé assiste l'utilisateur en vue de l'acquisition des images.

Ces prises de vues doivent toutefois être prises en nombre suffisant et dans des conditions permettant leur traitement automatique, de sorte à représenter chacune un ou plusieurs parties externes du véhicule automobile ou des vues de détails de certaines parties pour lesquelles l'utilisateur aurait identifié un dommage particulier.

À cet effet, le procédé peut mettre en œuvre une étape de prétraitement des images dans laquelle chaque image est calibrée sur un standard colorimétrique prédéterminé, de sorte à uniformiser les images acquises.

En outre, l'étape de prétraitement peut comprendre le retrait des images non exploitables, par exemple parce que leur luminosité ou contraste ne permet pas son exploitation.

En outre, on peut aussi mettre en œuvre une étape d'isolation du véhicule automobile dans chaque image, de sorte à détecter dans l'image le véhicule automobile à analyser. En effet, il arrive que d'autres véhicules automobiles 200 soient aussi présents dans certaines images acquises. Dans ce cas, ces véhicules tiers 200 sont retirés de l'image.

Toutefois, l'étape d'isolation n'est pas mise en œuvre dans le présent mode de réalisation, car le sous-procédé de détection des parties externes, décrit plus loin, met généralement en œuvre une telle étape d'isolation du véhicule, notamment lorsqu'il s'agit d'une détection par segmentation sémantique.

Une mise en œuvre possible pour l'homme du métier de l'étape de retrait des véhicules tiers est de ne conserver que le véhicule détecté comme étant celui occupant la plus grande surface visuelle sur l'image traitée. Toutefois, d'autres méthodes d'isolation du véhicule sur l'image sont possibles. On peut notamment tenir compte du point focal de l'image pour isoler le véhicule cible de l'image acquise, ou encore de métadonnées associées à l'image acquise telles que l'angle de prise de vue, l'orientation ainsi que la position géographique.

Le procédé met ensuite en œuvre une étape de sélection 11 d'images de référence.

Les images de références R1-R4 sont des images offrant la vision la plus globale du véhicule automobile.

À titre d'exemple, pour un véhicule automobile de petite taille, tel qu'un véhicule citadin, deux à quatre images de références R1-R4 peuvent suffire, par exemple dans l'exemple représenté figure 1 on obtient une image prise en perspective avant-droite du véhicule R1, une image frontale R2, une image latérale arrière gauche R3, et une image en perspective arrière droit R4, permettant de visualiser l'ensemble des parties externes du véhicule automobile.

Pour un véhicule de plus grande taille, un nombre plus grand d'images de référence pourrait alors être nécessaire, par exemple de 3 à 10 images de référence en fonction essentiellement des dimensions du véhicule.

Toutefois pour une analyse partielle d'un véhicule automobile, on peut prévoir la sélection d'une unique image de référence.

La définition du nombre d'images de référence peut aussi être fonction de la qualité des images ainsi que des angles et distances de prises de vue des images acquises.

Ainsi, on peut soit prédéterminer soit déterminer en fonction des images acquises, le nombre d'images de référence nécessaires.

Dans ce mode de réalisation, l'étape de sélection 11 est réalisée par la mise en œuvre d'un module d'apprentissage automatique, ici un réseau de neurones convolutif, entraîné pour détecter des vues « en plan large » du véhicule automobile, permettant de distinguer le plus grand nombre de parties externes du véhicule automobile.

Aussi le module d'apprentissage est entraîné, à partir d'images d'entraînement labellisées, de sorte à sélectionner des images de véhicule automobile prises selon des angles avantageux tels que des angles de prise de vue avant-droits, avant-gauche, arrière-droit ou arrière-gauche.

Selon une alternative, l'étape de sélection 11 peut être mise en œuvre par une action d'interface homme-machine invitant l'utilisateur à sélectionner les images les plus représentatives des angles de vue nécessaires, en fonction d'un modèle ou d'un type de véhicule automobile renseigné préalablement.

Dans le deuxième mode de réalisation de l'invention, comprenant l'étape d'acquisition 10 assistée des images, la sélection 11 des images de références est alors prédéterminée en imposant à l'utilisateur des prises de vues du véhicule adaptées comme image de référence.

Le procédé selon l'invention met ensuite en œuvre deux sous-procédés 12 et 13, indépendants l'un de l'autre, et qui peuvent par conséquent être mis en œuvre soit en parallèle, comme représenté figure 4, par exemple sur des cœurs de processeurs différents, ou en séquentiel, comme représenté figure 5, par exemple sur un même cœur de processeur.

Le premier sous-procédé 12 est un sous-procédé de détection des parties externes pour chaque image de référence R1-R4 sélectionnée, comme représenté figure 1a-1c.

Ce sous-procédé de détection met en œuvre un procédé d'apprentissage automatique, ici un autre réseau de neurones convolutif, permettant une segmentation de l'image. En particulier, les approches de segmentation sémantiques, telles qu'exposées dans la publication scientifique Fully Convolutional Networks for Semantic Segmentation, Long, Shelhamer, Darrell, 28th IEEE Conférence on Computer Vision and Pattern Recognition*,* sont adaptées pour détecter et identifier les différentes parties externes du véhicule automobile.

Toutefois, l'invention n'est pas seulement limitée à une approche de segmentation sémantique.

Selon une mise en œuvre particulière de l'invention, on met en œuvre lors de ce sous-procédé 12, une étape de reconnaissance de la plaque d'immatriculation du véhicule automobile 100, et une étape de détection automatique des caractères de ladite plaque d'immatriculation, aussi appelé étape d'*OCR.*

En parallèle, le procédé met en œuvre un sous-procédé de détection 13 de dommages sur chaque image acquise.

Ce sous-procédé 13 met tout d'abord en œuvre une étape d'analyse 131, comme représenté figure 2, où une image a) est analysée par le sous-procédé 3 de sorte à identifier des dommages présents, représentés dans des boîtes d'encombrement rectangulaires 21-24 sur la partie b) de la figure 2.

Cette étape d'analyse 131 est mise en œuvre pour chaque image acquise lors de l'étape d'acquisition 10.

Ces dommages détectés sont en particulier des rayures ou des enfoncements ou déformations des parties externes du véhicule automobile.

Ensuite, pour chaque image analysée, on procède alors à une étape d'association 132 à une image de référence R1-R4. Cette association est mise en œuvre par la recherche sur les images de références sélectionnées précédemment, de parties externes communes avec l'image analysée, qu'il s'agisse par exemple d'un logo, d'une roue, ou d'un signe distinctif particulier.

Ainsi, cette étape d'association permet de définir une application projective, que l'on appellera aussi dans la suite de la description une transformation de plan.

Une telle application projective tel qu'une fonction homographique permet notamment de définir une fonction de projection entre une partie externe identifiée sur l'image analysée avec cette même partie externe identifiée sur l'image de référence R1-R4.

L'invention n'est pas limitée à la définition d'une fonction homographique et l'homme du métier pourrait, selon les particularités des images à traiter, définir d'autres formes application projective.

La fonction de transformation de plan ne peut toutefois pas toujours être calculée sur la base d'une partie externe identifiée, car l'image analysée peut ne pas comprendre de parties externes complètes. Aussi, on procédera à l'association par un ensemble de points, ou pixels, caractéristiques, permettant d'être identifiés sur l'image analysée et sur au moins une image de référence R1-R4.

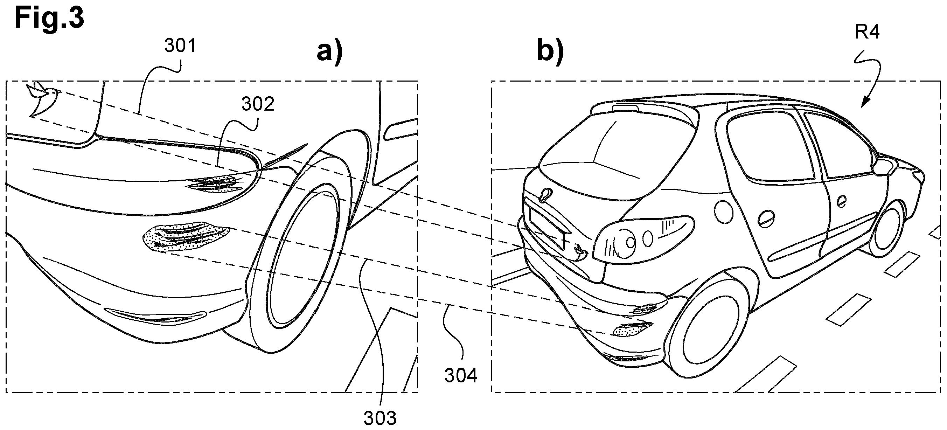

Cette fonction de transformation de plan est représentée visuellement figure 3 par les traits 301, 302 qui représentent la transformation de plan du logo du véhicule entre l'image analysée a) et l'image de référence associée b).

Si la transformation est ici représentée par deux traits d'exemple, il est clair pour l'homme du métier que la fonction de transformation de plan est obtenue par l'évaluation de tous les pixels, ou une grande partie d'entre eux, de l'image analysée et de l'image de référence associée.

Ensuite, on procède alors à une étape de transposition 133 des dommages détectés sur l'image analysée vers l'image de référence associée, tel que représenté par les traits 303, 304 d'exemple.

Cette transposition est réalisée par la fonction de transformation de plan calculée lors de l'étape d'association 132 précédente.

Cette étape de transposition 133 permet ainsi de placer les dommages détectés dans la figure analysée sur la figure de référence R4, ce qui permet ainsi autrement dit de regrouper les dommages sur les figures de références R1-R4.

En particulier si la figure est déjà présente sur la figure de référence R4, elle est alors superposée, ou ignorée, ce qui est une option possible de mise en œuvre.

Une fois les dommages détectés positionnés sur l'image de référence R4, on procède alors au calcul 134 de leur dimension, qui peut être par exemple le calcul d'une boîte d'encombrement tel que représenté figure 2 b), ou une superficie estimée, par exemple lors d'un enfoncement, ou encore une longueur principale, par exemple dans le cadre d'une rayure.

Ce calcul de dimension est quant à lui généralement réalisé par des algorithmes de traitement d'image, comprenant un seuillage, un détourage ou toute autre méthode connue de l'homme du métier.

En outre, ce calcul de dimension de chaque dommage 21-24 comprend la définition d'un élément visuel de référence sur l'image de référence, tel qu'une jante de roue, un logo de véhicule automobile, un phare ou une plaque d'immatriculation, ou tout autre élément dont la dimension est connue. Ainsi, la dimension de chaque dommage 21-24 étant calculée en fonction de la dimension de l'élément visuel de référence.

Une fois les deux sous-procédés 12 et 13 réalisés, on procède alors, pour chaque image de référence, à une étape de croisement 14 des parties externes détectées par le sous-procédé de détection de parties externes 12 avec les dommages regroupés et positionnés lors du sous-procédé de détection des dommages 13.

Cette étape de croisement permet ainsi de créer une liste de dommages pour chaque partie externe du véhicule automobile.

Une telle étape de croisement peut être simplement mise en œuvre par la détection de la position d'un dommage sur l'image de référence, et par l'association à la partie externe présente à cette même position sur la même image de référence.

Ainsi, on est capable, par ce procédé 1 de déterminer de manière précise, et à partir de simples images, une liste des dommages présents sur un véhicule automobile, dimensionné et associé à la partie externe sur lequel il est présent.

## Revendications

1. Procédé (1) mis en œuvre par ordinateur de détection de dommages (21-24) sur un véhicule automobile (100) présentant une pluralité de parties externes (101-108), telles que des parties de carrosseries (101) ou des équipements extérieurs tels que des phares (105), rétroviseurs (108), poignées (1018), ledit procédé (1) comprenant d'une part :
- Une étape d'acquisition (10) d'une pluralité d'images du véhicule automobile (100) ;
**Caractérisé en ce qu'**il comprend :
- Une étape de sélection (11) d'au moins une image de référence (R1-R4) parmi ladite pluralité d'images ;
- Un sous-procédé de détection (12) des parties externes (101-108) du véhicule automobile (100) sur ladite au moins une image de référence (R1-R4) comprenant ; et
- un sous-procédé de détection (13) de dommages (21-24)
comprenant, pour chaque image acquise à l'étape d'acquisition (10) :
∘ Une étape d'analyse (131) au cours de laquelle on détecte dans ladite image des dommages (21-24),
∘ Une étape d'association (132) au cours de laquelle on détermine une fonction de transformation de plan entre ladite image et ladite au moins une image de référence (R1-R4) ;
∘ Une étape de transposition (133) des dommages détectés dans ladite image sur ladite au moins une image de référence (R1-R4) par ladite fonction de transformation de plan déterminée ; et
∘ Une étape de calcul (134) de la dimension de chaque dommage transposé sur ladite image de référence (R1-R4) ;
Le procédé comprenant en outre une étape de croisement (14) des éléments externes détectés sur ladite au moins une image de référence (R1-R4) avec les dommages transposés sur ladite image de référence (R1-R4) de sorte à déterminer pour chaque partie externe du véhicule les dommages associés.

2. Procédé selon la revendication 1 **caractérisé en ce que** ladite fonction de transformation de plan comprend une fonction homographique.

3. Procédé (1) selon la revendication 1 ou 2, **caractérisé en ce qu'**à ladite étape de sélection (11) on sélectionne une pluralité d'images de référence (R1-R4), et **en ce qu'**à l'étape d'association (132) on détermine pour chaque image au moins une image de référence (R1-R4) autorisant le calcul d'une fonction de transformation de plan.

4. Procédé (1) selon la revendication 3, **caractérisé en ce que** pour chaque image de la sélection d'images, ledit calcul de transformation de plan des dommages (21-24) détectés de ladite image vers ladite image de référence (R1-R4) est calculé en fonction d'une transformation bijective (301-304) entre un ensemble de points caractéristiques sur ladite image et ce même ensemble de points caractéristiques sur ladite image de référence.

5. Procédé selon l'une quelconque des revendications 1 à 4, **caractérisé en ce que** ladite étape de calcul (134) de la dimension de chaque dommage (21-24) comprend la définition d'un élément visuel de référence sur ladite image de référence, tel qu'une jante de roue, un logo de véhicule automobile, un phare ou une plaque d'immatriculation, ladite dimension de chaque dommage (21-24) étant calculée en fonction de la dimension dudit élément extérieur de référence.

6. Procédé selon l'une quelconque des revendications 1 à 5, dans lequel on définit au moins quatre images de référence (R1-R4).

7. Procédé selon l'une quelconque des revendications 1 à 6, **caractérisé en ce que** le sous-procédé de détection (13) de dommages (21-24) comprend la mise en œuvre d'un module de réseau de neurones convolutifs.

8. Procédé selon l'une quelconque des revendications 1 à 7, **caractérisé en ce que** le sous-procédé de détection (12) des parties externes (101-108) du véhicule automobile (100) comprend la mise en œuvre d'un module de segmentation sémantique de l'image.

9. Procédé selon l'une quelconque des revendications 1 à 8, **caractérisé en ce que** le sous-procédé de détection (12) des parties externes (101-108) du véhicule automobile (100) comprend une sous-étape de reconnaissance d'une plaque d'immatriculation, et d'une sous-étape de détection automatique des caractères de ladite plaque d'immatriculation.

10. Procédé selon l'une quelconque des revendications 1 à 9, **caractérisé en ce que** l'étape d'acquisition d'une pluralité d'images du véhicule automobile est suivie d'une étape de prétraitement au cours de laquelle les images sont uniformisées et au cours de laquelle on procède au retrait des images acquises non exploitables.

11. Procédé selon la revendication 10, **caractérisé en ce que** l'étape de prétraitement comprend en outre une étape d'isolation du véhicule automobile (100) et/ou de retrait des véhicules tiers (200) sur ladite image.

12. Dispositif de détection de dommages sur un véhicule automobile présentant une pluralité de parties externes (101-108), tel que des parties de carrosseries (101) ou des équipements extérieurs tels que des phares (105), rétroviseurs (108), poignées (1018), ledit dispositif comprenant :
- Des moyens d'acquisition (10) d'une pluralité d'images du véhicule automobile (100) ;
Et des moyens de calcul aptes à mettre en œuvre :
- Une étape de sélection (11) d'au moins une image de référence (R1-R4) parmi ladite pluralité d'images ;
- Un sous-procédé de détection (12) des partie externes (101 -108) du véhicule automobile (100) sur ladite au moins une image de référence (R1-R4) comprenant ; et
- un sous-procédé de détection (13) de dommages (21-24) comprenant, pour chaque image acquise à l'étape d'acquisition (10) :
∘ Une étape d'analyse (131) au cours de laquelle on détecte dans ladite image des dommages (21-24),
∘ Une étape d'association (132) au cours de laquelle on détermine une fonction de transformation de plan entre ladite image et ladite au moins une image de référence (R1-R4) ;
∘ Une étape de transposition (133) des dommages détectés dans ladite image sur ladite au moins une image de référence (R1-R4) par ladite fonction de transformation de plan déterminée ; et
∘ Une étape de calcul (134) de la dimension de chaque dommage transposé sur ladite image de référence (R1-R4) ; et
une étape de croisement (14) des éléments externes détectés sur ladite au moins une image de référence (R1-R4) avec les dommages transposés sur ladite image de référence (R1-R4) de sorte à déterminer pour chaque partie externe du véhicule les dommages associés.
